# FASCICULE DE BREVET EUROPEEN

(11) **EP 1 310 537 B1**
(45) Date de publication et mention de la délivrance du brevet: **29.11.2006**
(21) Numéro de dépôt: 02292691.9
(22) Date de dépôt: 30.10.2002
(51) Int. Cl.: C09J 5/02, B65D 77/20

(54) **Composition pour le scellage d'un opercule sur un récipient**
Zusammensetung zum Versiegeln einer Abdeckung auf einem Behälter
Composition for sealing a cover on a container

(30) Priorité: 31.10.2001 FR 0114098
(43) Date de publication de la demande: 14.05.2003
(73) Titulaire: Les Poteries Malicornaises, 72270 Malicorne sur Sarthe (FR)
(72) Inventeur: Deshayes, Gérard, 72700 Pruille Le Chetif (FR)
(74) Mandataire: Laget, Jean-Loup

(56) Documents cités:
- WO-A-93/24568
- GB-A- 2 030 103
- GB-A- 2 130 574
- US-A- 4 396 655
- DATABASE WPI Section Ch, Week 198311 Derwent Publications Ltd., London, GB; Class A18, AN 1983-26429K XP002204863 & JP 58 020651 A (TOYO ALUMINIUM KK), 7 février 1983 (1983-02-07)

## Description

La présente invention concerne une composition pour le scellage d'un opercule tel qu'un film d'operculage sur un récipient en un matériau minéral tel que le verre, la céramique, métallique ou en bois. L'invention a également trait à un procédé pour le traitement d'un récipient en un matériau minéral, métallique ou en bois en vue de son operculage, avec une composition pour le scellage ainsi que le récipient ainsi traité.

Actuellement, dans le cas de récipients en verre, en céramique ou encore en métal tels que des terrines ou autres, il est difficile de procéder à un operculage dudit récipient. En effet, un film d'operculage ne peut être fixé correctement sur les bords ou plages de scellage de tels récipients.

Ainsi, pour des récipients en verre, on fait appel à des systèmes de couvercle souvent difficiles à mettre en oeuvre. Quant aux récipients métalliques, la faible épaisseur et les déformations de ceux-ci permettent difficilement une fermeture hermétique.

On a cependant proposé de réaliser un traitement des pots en verre pour les operculer, par dépôt de fumarate de chrome sur les plages de scellage des pots. Cependant, un tel operculage ne peut être utilisé que pour sceller des pots renfermant des produits secs. En effet, l'operculage ainsi obtenu n'est pas étanche et ne peut, par conséquent, être utilisé pour des récipients renfermant des produits liquides ou similaires.

On a également proposé de fixer un opercule d'aluminium par induction ou encore d'utiliser des vernis de thermoscellage.

Toutefois, aucune de ces solutions ne donne entière satisfaction sur des récipients en matériau minéral tel que le verre, métallique ou en bois.

Le brevet US-A-4.396.655 décrit un procédé de scellage d'un opercule constitué d'une feuille d'aluminium revêtue d'un polymère adhésif sur les bords d'un récipient en verre. Ce procédé comporte une étape de préparation des bords ou plages de scellage par chauffage, en particulier à la flamme, une étape de dépose d'une fine couche de film de silane, une étape de refroidissement suivie d'une étape de dépose d'une couche à base d'éthylène acide acrylique. La dépose successive de ces deux couches est éventuellement répétée puis l'opercule est déposé et maintenu appliqué à l'aide de la pression et de la température. En conséquence, un nouveau traitement thermique est nécessaire. Ce procédé se caractérise par la complexité de sa mise en oeuvre, en particulier par le caractère fastidieux des étapes de dépose et par la nécessité d'opérer plusieurs traitements thermiques suivis de refroidissement allongeant d'autant le temps de mise en oeuvre du procédé.

L'abrégé du brevet JP-58020651 décrit, de manière similaire, une composition à base de silane et d'une résine thermoplastique copolymère éthylène vinyle acétate. Le silane est appliqué sous forme d'une première couche sur les bords ou plages de scellage du récipient préalablement revêtues d'un oxyde métallique tel que du tétrachlorure de titane ou d'étain. La résine thermoplastique est ensuite appliquée à la surface de la couche de silane, parallèlement au chauffage de la surface à une température comprise entre 80 et 250°. L'application des composés s'effectue donc en deux temps. Par ailleurs, une couche supplémentaire d'un oxyde métallique est nécessaire.

Le brevet GB-A-2.030.103 décrit l'utilisation d'un adhésif activable par la chaleur dont la nature n'est pas décrite dans le document en coopération avec un promoteur d'adhérence tel qu'un composé silane. Ces deux composés peuvent être appliqués sous forme d'une couche unique dans laquelle les constituants sont intégrés ou sous forme d'une pluralité de couches, chaque couche renfermant un constituant.

Enfin, le brevet GB-A-2.130.574 décrit l'application d'une mince couche d'un adhésif comprenant un mélange d'un copolymère éthylène acide acrylique d'indice de fusion inférieur ou égal à 300 et d'un silane. A nouveau, l'application de l'adhésif nécessite un traitement thermique préalable des plages ou bords de scellage sur lesquels l'adhésif doit s'appliquer, la dépose de l'adhésif étant suivie d'un nouveau traitement thermique.

En conclusion et dans tous les documents précités, le procédé nécessite généralement la mise en oeuvre de deux traitements thermiques : l'un nécessaire à la préparation des plages ou bords de scellage sur lesquels la composition de scellage sera appliquée, l'autre étant effectué une fois la composition de scellage appliquée. De même, la composition de scellage doit généralement être appliquée sous forme de plusieurs couches, chaque couche renfermant un constituant.

Enfin, dans toutes les compositions précitées, seule la combinaison d'une résine adhésive et d'un silane est décrite.

Les essais menés par le présent demandeur ont montré que ces compositions ne donnent pas satisfaction. Elles ne permettent pas en particulier d'obtenir une fermeture étanche aux liquides et empêchent le récipient, une fois rempli, de subir un traitement thermique tel qu'une cuisson, une pasteurisation, une stérilisation à l'état scellé de l'opercule.

En conséquence, de telles compositions sont limitées à certaines applications et ne peuvent pas s'appliquer dans tous les cas de fermetures, à savoir dans le cas d'une fermeture après remplissage de produits liquides ou solides, chauds ou froids, la fermeture étant suivie ou non d'une cuisson ou pasteurisation.

Un but de la présente invention est donc de proposer une composition pour le scellage permettant de traiter les bords ou plages de scellage d'un récipient en matériau minéral tel que le verre, la céramique, métallique ou en bois tout en obtenant un ancrage de l'opercule qui soit tel que cet ancrage est étanche, en particulier lorsque le récipient renferme des produits liquides et qui est également résistant à un traitement thermique tel qu'une cuisson, pasteurisation ou une stérilisation une fois l'opercule posé.

Un autre but de l'invention est de proposer un procédé et une composition pour le scellage permettant de traiter les bords ou plages de scellage d'un récipient en matériau minéral tel que le verre, la céramique, métallique ou en bois sans nécessiter de traitement thermique préalable des bords ou plages de scellage, l'application de la composition pouvant s'effectuer à température ambiante.

A cet effet, l'invention a pour objet une composition pour le scellage d'un opercule sur un récipient en un matériau minéral tel que le verre, la céramique, métallique ou en bois, ladite composition étant constituée d'au moins une résine polymérique thermoplastique ou élastomère thermoplastique en solution, en dispersion ou en émulsion et d'un additif silane ou organosilane, caractérisée en ce que ladite composition comporte au moins deux résines choisies dans des catégories différentes parmi les résines acryliques et les résines vinyliques homopolymères, les copolymères d'éthylène tels qu'un copolymère éthylène/acétate de vinyle (EVA), les copolymères éthylène/acide tels qu'un copolymère éthylène/acide acrylique (EAA), les polyacides, les polyacides salifiés, les résines styréniques ou dans le groupe des résines constituées des latex naturels et synthétiques.

De telles résines présentent des propriétés d'adhésivité lorsqu'elles sont soumises à un traitement thermique qui, soit les polymérise, soit les rend thermocollantes. L'utilisation combinée de deux résines permet l'obtention d'une composition résistant à une cuisson, une pasteurisation ou une stérilisation du contenu du récipient à l'état posé de l'opercule.

Par ailleurs, les résines étant en solution, dispersion ou émulsion, elles peuvent exister sous forme d'un film facilement déposable sur les bords d'un récipient, par exemple, ou sur n'importe quelle autre plage de scellage dudit récipient.

Ainsi selon une première variante de l'invention, une composition pour le scellage selon l'invention peut être appliquée sous forme d'une ou plusieurs couches sur les bords ou plages de scellage d'un récipient, chaque couche renfermant l'un des constituants de ladite composition.

Selon une seconde variante de l'invention, la composition pour le scellage peut être appliquée sous forme d'une ou plusieurs couches sur les bords ou plages de scellage d'un récipient, chaque couche renfermant l'ensemble des constituants de ladite composition.

On a pu remarquer dans ce cas que, lors du mélange des constituants de la composition selon l'invention, les résines ne sont pas forcément miscibles avec le promoteur d'adhérence constitué par l'additif silane ou organosilane. Il se peut qu'alors l'additif migre vers le récipient en résultat de cette non-miscibilité, promouvant ainsi l'adhérence.

De manière avantageuse, ladite composition de scellage peut donc être appliquée facilement en couche, uniquement sur les zones (bords ou plages de scellage) des récipients qui doivent recevoir un opercule. De ce fait, les produits conditionnés ne risquent pas d'entrer en contact avec ladite composition de scellage, qui, de toutes façons, est choisie de manière à offrir en outre une complète compatibilité alimentaire.

De préférence, la composition pour le scellage est constituée au moins du copolymère éthylène-acide acrylique (EAA) et du copolymère éthylène-vinyle-acétate (EVA) en solution, en dispersion ou en émulsion et d'un additif silane ou organosilane.

De préférence, l'additif est un γ-amino-propyltriéthoxysilane.

Une composition pour le scellage selon l'invention est constituée de préférence d'un copolymère éthylène-acide acrylique représentant 96,5 à 98,5 % en poids de la composition totale, du copolymère éthylène-vinyle-acétate (EVA) représentant de 1,5 à 3,5 % en poids de la composition totale et de silane représentant 0,005 à 0,015 % en poids de la composition totale.

L'invention vise également un procédé de traitement d'un récipient en un matériau minéral tel que le verre, la céramique, métallique ou en bois, en vue du scellage d'un opercule sur ledit récipient, caractérisé en ce qu'on dépose, de préférence en une ou plusieurs couches, une composition pour le scellage telle que définie précédemment, sur des bords ou plages de scellage dudit récipient et on soumet ledit récipient à un traitement thermique de manière à promouvoir la fixation de la composition aux plages de scellage du récipient.

Ainsi le récipient, une fois qu'il a reçu la composition pour le scellage, subit un traitement thermique à l'aide de moyens de chauffage tels que tunnel, cellule.

Durant le traitement thermique d'une durée comprise entre 20 et 60 minutes, de préférence entre 30 et 45 minutes, on élève progressivement la température pour atteindre un palier compris entre 150 et 160 degrés. Le refroidissement est également progressif à température ambiante ou forcé par des moyens classiques tels que ventilation.

De préférence, on dépose la composition de scellage par trempage des bords ou plages de scellage du récipient dans un bain thermostaté de ladite composition.

En variante, on dépose la composition par l'intermédiaire de rouleaux enducteurs.

Avantageusement, on peut ainsi limiter la couche ou les couches de composition pour le scellage à une épaisseur de quelques microns.

Afin d'éviter tout risque de coulure de la composition ou autres, on maintient le récipient à l'état retourné, plages de scellage en bas, au cours du traitement thermique.

Le traitement thermique du procédé selon l'invention permet de promouvoir la fixation de la composition selon l'invention au récipient soit en polymérisant les résines de ladite composition soit en les rendant thermocollantes.

Les récipients ainsi traités peuvent ensuite être distribués vides aux différents opérateurs de la chaîne de production qui les remplissent et les ferment à l'aide de films d'operculage par exemple.

On obtient ainsi des récipients traités par la composition pour le scellage selon l'invention qui permettent ensuite un ancrage extrêmement résistant des opercules sur des récipients divers en céramique, verre, métal, bois ou autre. L'opercule est généralement constitué d'un film déposé sur l'ouverture du récipient.

L'invention a également pour objet un récipient réalisé en un matériau minéral tel que le verre, la céramique, métallique ou en bois destiné à recevoir un opercule devant être scellé sur ses bords ou plages de scellage, caractérisé en ce que les plages de scellage sont revêtues d'une ou plusieurs couches d'une composition pour le scellage selon l'invention précédemment décrite.

Avantageusement, les récipients en céramique, qui étaient traditionnellement mis en sac sous vide, peuvent recevoir maintenant un opercule qui permet de réduire de façon importante le poids de matière plastique, tout en améliorant l'aspect visuel et esthétique du récipient.

De plus, on a pu remarquer que les récipients pourvus d'une composition pour le scellage et scellés selon l'invention présentent une résistance thermique améliorée, ce qui permet un traitement thermique tel qu'une pasteurisation ou une cuisson dans l'emballage fermé.

Enfin, il est ainsi possible de fermer de manière esthétique, hygiénique, sûre, économique et hermétique sous vide ou sous atmosphère des récipients réputés difficiles.

On décrira maintenant l'invention plus en détail en référence à un exemple de réalisation de l'invention.

La composition selon l'invention est constituée de 5 kg d'une première résine constituée d'un copolymère éthylène acide acrylique, d'une seconde résine constituée de 103 g de copolymère EVA (éthylène vinyle acétate) et de 0,5 g de silane en tant qu'additif.

Des terrines en céramique devant recevoir un opercule par la suite sont plongées dans la composition pour le scellage ainsi réalisée de manière à ce que les bords desdites terrines devant recevoir un opercule soient recouverts d'au moins une couche de ladite composition.

Les terrines ainsi traitées sont ensuite engagées dans des tunnels de chauffage pour subir le traitement thermique consistant en une augmentation progressive de la température jusqu'à un palier de 150 degrés.

Les terrines ainsi traitées peuvent être fournies à des utilisateurs qui procèderont à leur operculage après remplissage.

## Revendications

1. Composition pour le scellage d'un opercule sur un récipient en un matériau minéral tel que le verre, la céramique, métallique ou en bois, ladite composition étant constituée d'au moins une résine polymérique thermoplastique ou élastomère thermoplastique en solution, en dispersion ou en émulsion et d'un additif silane ou organosilane,
**caractérisée en ce que** ladite composition comporte au moins deux résines choisies dans des catégories différentes parmi les résines acryliques et les résines vinyliques homopolymères, les copolymères d'éthylène tels qu'un copolymère éthylène/acétate de vinyle (EVA), les copolymères éthylène/acide tels qu'un copolymère éthylène/acide acrylique (EAA), les polyacides, les polyacides salifiés, les résines styréniques ou dans le groupe des résines constituées des latex naturels et synthétiques.

2. Composition selon la revendication 1,
**caractérisée en ce qu**'elle est constituée au moins du copolymère éthylène-acide acrylique (EAA) et du copolymère éthylène-vinyle-acétate (EVA) en solution, en dispersion ou en émulsion et d'un additif silane ou organosilane.

3. Composition selon l'une des revendications 1 et 2,
**caractérisée en ce qu**'elle est constituée de préférence d'un copolymère éthylène-acide acrylique représentant 96,5 à 98,5 % en poids de la composition totale, du copolymère éthylène-vinyle-acétate (EVA) représentant de 1,5 à 3,5 % en poids de la composition totale et de silane représentant 0,005 à 0,015 % en poids de la composition totale.

4. Composition de scellage selon la revendication 1,
**caractérisée en ce qu**'elle est applicable sur les bords ou les plages de scellage d'un récipient sous forme d'une ou plusieurs couches, chaque couche renfermant l'ensemble des constituants de ladite composition.

5. Composition de scellage selon la revendication 1,
**caractérisée en ce que** ladite composition est applicable sur les bords ou les plages de scellage d'un récipient sous forme d'une ou plusieurs couches, chaque couche renfermant l'un des constituants de ladite composition.

6. Composition de scellage selon l'une des revendications 1 à 5,
**caractérisée en ce que** l'additif est un γ-amino-propyl-triéthoxysilane.

7. Procédé pour le traitement d'un récipient en un matériau minéral tel que le verre, la céramique, métallique ou en bois en vue de son scellage par un opercule,
**caractérisé en ce qu**'on dépose, de préférence en une ou plusieurs couches, une composition de scellage selon l'une des revendications 1 à 6 sur des bords ou plages de scellage dudit récipient, on soumet ledit récipient à un traitement thermique de manière à assurer la fixation de la composition aux plages de scellage du récipient.

8. Procédé selon la revendication 7,
**caractérisé en ce que**, durant le traitement thermique d'une durée comprise entre 20 et 60 minutes, de préférence entre 30 et 45 minutes, on élève progressivement la température pour atteindre un palier compris entre 150 et 160 degrés.

9. Procédé selon l'une des revendications 7 et 8,
**caractérisé en ce qu**'on dépose la composition par trempage des plages de scellage du récipient dans un bain thermostaté de la composition.

10. Procédé selon l'une des revendications 7 et 8,
**caractérisé en ce qu**'on dépose la composition par l'intermédiaire de rouleaux enducteurs.

11. Procédé selon l'une des revendications 7 à 10,
**caractérisé en ce qu**'on maintient le récipient à l'état retourné, plages de scellage en bas, au cours du traitement thermique de manière à éviter les coulures ou autres.

12. Récipient réalisé en un matériau minéral, tel que le verre, la céramique métallique ou en bois, destiné à recevoir un opercule devant être scellé sur ses bords ou plages de scellage,
**caractérisé en ce que** les plages de scellage sont revêtues d'une ou plusieurs couches d'une composition de scellage selon l'une des revendications 1 à 6.

## Claims

1. Composition for sealing a closure on a container made of an inorganic material such as glass, ceramic, metal or wood, said composition consisting of at least one thermoplastic polymeric resin or thermoplastic elastomer as a solution, dispersion or emulsion and a silane or organosilane additive,
**characterized in that** said composition comprises at least two resins chosen in different categories from acrylic resins and homopolymeric vinyl resins, ethylene copolymers such as an ethylene/vinyl acetate copolymer (EVA), ethylene/acid copolymers such as an ethylene/acrylic acid copolymer (EAA), polyacids, salts of polyacids or styrene resins, or from the group consisting of natural or synthetic latices.

2. Composition according to claim 1,
**characterized in that** it consists of at least the ethylene-acrylic acid copolymer (EAA) and the ethylene-vinyl acetate copolymer (EVA) as a solution, dispersion or emulsion and a silane or organosilane additive.

3. Composition according to either of claims 1 or 2,
**characterized in that** it preferably consists of an ethylene-acrylic acid copolymer representing 96.5 to 98.5% by weight of the total composition, of the ethylene-vinyl acetate copolymer (EVA) representing 1.5 to 3.5% by weight of the total composition and silane representing 0.005 to 0.015% by weight of the total composition.

4. Sealing composition according to claim 1,
**characterized in that** it can be applied to the sealing edges or areas of a container in the form of one or more layers, each layer enclosing all the constituents of said composition.

5. Sealing composition according to claim 1,
**characterized in that** said composition can be applied to the sealing edges or areas of a container in the form of one or more layers, each layer enclosing one of the constituents of said composition.

6. Sealing composition according to one of claims 1 to 5,
**characterized in that** the additive is a γ-amino-propyl-triethoxysilane.

7. Method for treating a container made of an inorganic material such as glass, ceramic, metal or wood with a view to sealing it with a closure,
**characterized in that** a sealing composition according to one of claims 1 to 6 is deposited, preferably in one or more layers, on the sealing edges or areas of said container, said container is subjected to a heat treatment so as to ensure that the composition is attached to the sealing areas of the container.

8. Method according to claim 7,
**characterized in that**, during heat treatment lasting between 20 and 60 minutes, preferably between 30 and 45 minutes, the temperature is progressively raised so as to reach a step of between 150 and 160 degrees

9. Method according to either of claims 7 or 8,
**characterized in that** the composition is deposited by dipping the sealing areas of the container in a thermostatically controlled bath of the composition.

10. Method according to either of claims 7 or 8,
**characterized in that** the composition is deposited by means of coating rollers.

11. Method according to one of claims 7 to 10,
**characterized in that** the container is held in an inverted state with the sealing areas at the bottom, during heat treatment so as to prevent runs or the like.

12. Container made of an inorganic material, such as glass, ceramic, metal or wood, intended to receive a closure that has to be sealed onto its sealing edges or areas,
**characterized in that** the sealing areas are coated with one or more layers of a sealing composition according to one of claims 1 to 6.

## Patentansprüche

1. Zusammensetzung zum Versiegeln einer Abdeckung auf einem Behälter aus einem mineralischen Material wie Glas, Keramik, Metall oder Holz, wobei diese Zusammensetzung aus mindestens einem thermoplastischen polymeren Harz oder thermoplastischen elastomeren Harz in Lösung, in Dispersion oder in Emulsion und aus einem Silan- oder Organosilanzusatzstoff besteht, **dadurch gekennzeichnet, dass** diese Zusammensetzung mindestens zwei Harze umfasst, die aus verschiedenen Kategorien unter den Acrylharzen und den homopolymeren Vinylharzen, den Ethylen-Copolymeren wie einem Ethylen-Vinylacetat-Copolymer (EVA-Copolymer), den Ethylen-Säure-Copolymeren wie einem Ethylen-Acrylsäure-Copolymer (EAA-Copolymer), den mehrbasigen Säuren, den als Salz vorliegenden mehrbasigen Säuren, den Styrolharzen oder aus der Gruppe der aus Naturlatex und synthetischem Latex bestehenden Harze ausgewählt werden.

2. Zusammensetzung nach Anspruch 1, **dadurch gekennzeichnet, dass** sie mindestens aus dem Ethylen-Acrylsäure-Copolymer (EAA-Copolymer) und dem Ethylen-Vinylacetat-Copolymer (EVA-Copolymer) in Lösung, in Dispersion oder in Emulsion und aus einem Silan- oder Organosilanzusatzstoff besteht.

3. Zusammensetzung nach einem der Ansprüche 1 und 2, **dadurch gekennzeichnet, dass** diese vorzugsweise aus einem Ethylen-Acrylsäure-Copolymer, das 96,5 bis 98,5 Massenprozent der Gesamtzusammensetzung ausmacht, aus Ethylen-Vinylacetat-Copolymer (EVA-Copolymer), das 1,5 bis 3,5 Massenprozent der Gesamtzusammensetzung ausmacht, und aus Silan, das 0,005 bis 0,015 Massenprozent der Gesamtzusammensetzung ausmacht, besteht.

4. Versiegelungszusammensetzung nach Anspruch 1, **dadurch gekennzeichnet, dass** sie auf die Ränder oder Versiegelungsbereiche eines Behälters in Form einer oder mehrerer Schichten auftragbar ist, wobei jede Schicht alle Bestandteile dieser Zusammensetzung beinhaltet.

5. Versiegelungszusammensetzung nach Anspruch 1, **dadurch gekennzeichnet, dass** die Zusammensetzung auf die Ränder oder Versiegelungsbereiche eines Behälters in Form einer oder mehrerer Schichten auftragbar ist, wobei jede Schicht einen der Bestandteile dieser Zusammensetzung beinhaltet.

6. Versiegelungszusammensetzung nach einem der Ansprüche 1 bis 5, **dadurch gekennzeichnet, dass** der Zusatzstoff ein γ-Aminopropyltriethoxysilan ist.

7. Verfahren zur Behandlung eines Behälters aus einem mineralischen Material wie Glas, Keramik, Metall oder Holz im Hinblick auf seine Versiegelung durch eine Abdeckung, **dadurch gekennzeichnet, dass** eine Versiegelungszusammensetzung nach einem der Ansprüche 1 bis 6, vorzugsweise in einer oder mehreren Schichten, auf Ränder oder Versiegelungsbereiche dieses Behälters aufgebracht wird und dieser Behälter einer Wärmebehandlung unterzogen wird, um die Fixierung der Zusammensetzung auf den Versiegelungsbereichen des Behälters zu gewährleisten.

8. Verfahren nach Anspruch 7, **dadurch gekennzeichnet, dass** während der Wärmebehandlung mit einer Dauer zwischen 20 und 60 Minuten, vorzugsweise zwischen 30 und 45 Minuten, die Temperatur schrittweise angehoben wird um ein Niveau zwischen 150 und 160 Grad zu erreichen.

9. Verfahren nach einem der Ansprüche 7 und 8, **dadurch gekennzeichnet, dass** die Zusammensetzung durch Eintauchen der Versiegelungsbereiche des Behälters in ein temperiertes Bad der Zusammensetzung aufgebracht wird.

10. Verfahren nach einem der Ansprüche 7 und 8, **dadurch gekennzeichnet, dass** die Zusammensetzung mit Hilfe von Auftragwalzen aufgebracht wird.

11. Verfahren nach einem der Ansprüche 7 bis 10, **dadurch gekennzeichnet, dass** der Behälter während der Wärmebehandlung kopfüber, mit den Versiegelungsbereichen nach unten, gehalten wird, um Verlaufungen oder ähnliches zu verhindern.

12. Behälter aus einem mineralischen Material wie Glas, Keramik, Metall oder Holz, der zur Aufnahme einer Abdeckung vorgesehen ist, die an seinen Rändern oder Versiegelungsbereichen versiegelt werden soll, **dadurch gekennzeichnet, dass** die Versiegelungsbereiche mit einer oder mehreren Schichten einer Versiegelungszusammensetzung nach einem der Ansprüche 1 bis 6 überzogen sind.
